Europäisches Patentamt

European Patent Office

Office européen des brevets

(11) Veröffentlichungsnummer: **0 024 644**
**A2**

(12) # EUROPÄISCHE PATENTANMELDUNG

(21) Anmeldenummer: **80104819.0**

(22) Anmeldetag: **14.08.80**

(51) Int. Cl.³: **C 08 L 69/00**
**//(C08L69/00, 51/00)**

(30) Priorität: **27.08.79 DE 2934538**

(43) Veröffentlichungstag der Anmeldung:
**11.03.81 Patentblatt 81/10**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Tacke, Peter, Dr.**
**Brandenburger Strasse 12**
**D-4150 Krefeld(DE)**

(72) Erfinder: **Korber, Helmut, Dr.**
**In der Hildscheid 18**
**D-5068 Odenthal(DE)**

(72) Erfinder: **Merten, Josef, Dr.**
**An der Blankstrasse 33a**
**D-4052 Korschenbroich 1(DE)**

(72) Erfinder: **Neuray, Dieter, Dr.**
**Buschstrasse 149**
**D-4150 Krefeld(DE)**

(54) **Polycarbonat-Polyolefin-Formmassen.**

(57) Mischungen aus 1. 70 - 99 Gew.-% überwiegend aromatischem Polycarbonat und 2. 30 - 1 Gew.-% Polyolefinpfropfpolymerisat aus a) 70 - 95 Gew.-% einer Pfropfgrundlage, bestehend aus einem Homopolymerisat von aliphatischen und/oder aromatischen Monoolefinen oder einem Copolymerisat aus diesen Olefinen, mit bis zu 50 Gew.-% anderen monoolefinisch ungesättigten, radikalisch polymerisierbaren Verbindungen und/oder bis zu Gew.-% Diolefinen, und b) 5 - 30 Gew.-% radikalisch pfropfbaren Vinylverbindungen, die erhalten worden sind, indem man die Schmelze der Pfropfgrundlage a) unter einem Druck von 1 - 150 bar bei einer Temperatur von 80 - 300°C mit Sauerstoff oder sauerstoffhaltigen Gasen unter intensiver Durchmischung maximal 10 Min. in Kontakt bringt, unmittelbar danach bei Abwesenheit von Sauerstoff bzw. sauerstoffhaltigem Gas unter intensiver Durchmischung die aufzupfropfenden Vinylverbindungen b) zufugt und nach der Pfropfpolymerisation die Restmonomeren entfernt.

EP 0 024 644 A2

Croydon Printing Company Ltd.

BAYER AKTIENGESELLSCHAFT          5090 Leverkusen-Bayerwerk

Zentralbereich                    G/AB
Patente Marken und Lizenzen


Polycarbonat-Polyolefin-Formmassen


Gegenstand der vorliegenden Erfindung sind Formmassen aus Gemischen von Polycarbonaten aromatischer Dihydroxyverbindungen und Olefinpfropfpolymerisaten.

Es ist bekannt, mechanische Eigenschaften von Polycarbonaten durch Zumischen von Polyolefinen, beispielsweise Polyethylen und Polypropylen, zu verbessern. Solche Mischungen sind in den DE-OS 11 46 251 und 16 94 664 beschrieben. Die Polyolefine sind jedoch mit dem Polycarbonat unverträglich, so daß die Formmassen inhomogen sind und daraus hergestellte Formteile Oberflächenstörungen und schlechte Festigkeiten in den Zusammenfließnähten haben.

Zusammenfließnähte entstehen an spritzgegossenen Formteilen immer dann, wenn in Spritzgießformen Teilströme der Masse nach dem Umfließen von Kernen aufeinanderstoßen.

Zur Verbesserung der Verträglichkeit von Polycarbonat mit Polyolefinen können den Mischungen Verträglichkeitsvermittler zugegeben werden. Als solche werden


Le A 19 882 - Europa

- 2 -

in DE-AS 16 94 353 epoxidierte Dienpolymerisate und
Metallsalze von Carbonsäuren und in DE-OS 23 04 214
ABS-Polymere genannt. Es hat sich jedoch gezeigt,
daß die Verträglichkeitsvermittler die Zusammenfließnahtfestigkeit nicht nennenswert verbessern.

Ebenso besitzen Mischungen aus Polycarbonaten und Copolymeren aus Ethylen und Vinylmonomeren, z.B. Ethylen-
Alkylacrylat-Copolymeren, die in DE-OS 23 42 214 beschrieben werden, gegenüber den reinen Polycarbonat-
Polyolefin-Mischungen eine nur unwesentlich verbesserte
Verträglichkeit und Zusammenfließnahtfestigkeit.

In DE-OS 23 22 435 werden Mischungen aus Polycarbonat
und Pfropfpolymeren von Gemischen aus Styrol und
Acrylnitril und Ethylen-Vinylacetat-Copolymeren mit
gutem Fließverhalten und verbesserter Kriechstromfestigkeit beschrieben. Auch solche Gemische zeigen
eine unbefriedigende Festigkeit in der Zusammenfließnaht.

Polycarbonat-Formmassen von befriedigender Oberflächenhomogenität, gutem Fließverhalten und für die praktische
Verwendung ausreichender Zusammenfließnahtfestigkeit
werden erhalten, wenn man Polycarbonat mit dem Pfropfpolymeren der DE-OS 2 734 105 mischt.

Gegenstand der Erfindung sind somit Mischungen aus
1. 70-99 Gew.-%, vorzugsweise 80-97 Gew.-% über-
    wiegend aromatischem Polycarbonat

<u>Le A 19 882</u>

- 3 -

2.  30-1 Gew.-%, vorzugsweise 20- 3 Gew.-% Olefinpfropfpolymerisat, erhalten aus

a)  70-95 Gew.-%, vorzugsweise 75-90 Gew.-%, einer
    Pfropfgrundlage bestehend aus einem Homopolymerisat
    von aliphatischen und/oder aromatischen Monoolefinen oder einem Copolymerisat aus diesen Olefinen,
    mit bis zu 50 Gew.-% anderer mono-olefinisch
    ungesättigter, radikalisch polymerisierbarer Verbindungen und/oder bis zu 5 Gew.-% Diolefinen, und

b)  5-30 Gew.-%, vorzugsweise 10-25 Gew.-% radikalisch
    pfropfbarer Vinylverbindungen, wobei sich die
    unter 1) und 2) genannten Prozentangaben auf die
    Summe der Komponenten 1) und 2), die in der ersten
    Zeile von a) und b) genannten Prozentangaben auf die
    Summe der Komponenten a) und b) und die restlichen
    unter a) gemachten Prozentangaben auf die Summe
    der für die Herstellung der Pfropfgrundlage verwandten Ausgangsmonomeren beziehen, wobei die Olefinpfropfpolymerisate erhalten worden sind, indem
    man die Schmelze der Pfropfgrundlage a) unter einem
    Druck von 1-150 bar bei einer Temperatur von 80-
    300°C mit Sauerstoff oder Sauerstoff-haltigen
    Gasen unter intensiver Durchmischung maximal
    10 Minuten in Kontakt bringt, unmittelbar danach
    bei Abwesenheit von Sauerstoff bzw. Sauerstoff-
    haltigem Gas unter intensiver Durchmischung die
    aufzupfropfenden Vinylverbindungen b) zufügt
    und nach der Pfropfpolymerisation die Restmonomeren
    entfernt.

Le A 19 882

Als Polycarbonate (Komponente 1) im Sinne der Erfindung kommen die durch Umsetzung von Diphenolen, insbesondere von Dihydroxydiarylalkanen, mit Phosgen oder Diestern der Kohlensäure erhältlichen Polykondensate in Betracht, wobei neben den unsubstituierten Dihydroxydiarylalkanen auch solche geeignet sind, deren Arylreste in o- und/ oder m-Stellung. zu Hydroxylgruppen Methylgruppen oder Halogenatome tragen. Ebenso sind verzweigte Polycarbonate geeignet.

Die Polycarbonate haben bevorzugt mittlere Gewichtsmittel der Molekulargewichte $\overline{M}w$ zwischen 10.000 und 100.000, vorzugsweise zwischen 20.000 und 40.000 , gemessen nach der Methode der Lichtzerstreuung.

Geeignete Diphenole sind z.B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkyliden-bisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha$, $\alpha$'-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-

Le A 19 882

propan-2,2 (Tetrabrombisphenol A), Bis-(4-hydroxy-3,5-dimethyl-phenyl)-propan-2,2 (Tetramethyl-bisphenol A), Bis-(4-hydroxy-phenyl)-cyclohexan-1,1 (Bisphenol Z) sowie auf Basis von Dreikernbisphenolen wie $\alpha$ , $\alpha$'-Bis-(4-hydroxyphenyl)-p-diisopropylbenzol.

Weitere für die Herstellung von Polycarbonaten geeignete Diphenole sind in den US-PS 2 970 131, 2 991 273, 2 999 835, 2 999 846, 3 028 635, 3 062 781, 3 148 172, 3 271 367 und 3 275 601 beschrieben.

Für die zur Herstellung der erfindungsgemäßen Mischungen erforderlichen Polyolefinpfropfpolymerisate (Komponente 2) sind als Polyolefin-Pfropfgrundlage (a) alle aliphatischen Polyolefine, wie z.B. Polyethylen, Polypropylen, Polybuten, sowie deren Copolymerisate, wie z.B. Copolymerisate aus Ethylen und Propylen, geeignet. Die Polyolefine können darüber hinaus bis zu 5 Gew.-% Reste von Diolefinen sowie bis zu 50 Gew.-% Reste radikalisch copolymerisierbarer Vinylverbindungen enthalten, insbesondere solche auf Basis von Vinylestern, vorzugsweise Vinylacetat, bzw. ungesättigten Carbonsäuren und/oder deren Derivaten.

Bevorzugte Pfropfgrundlagen sind Polyethylen, Polypropylen, Copolymere aus Ethylen und Propylen und Ethylen-Vinylacetat-Copolymere.

Bevorzugte ungesättigte Carbonsäuren bzw. Säurederivate sind Acrylsäure und Methacrylsäure bzw. deren Ester und Amide, insbesondere die Methyl-, Ethyl-, n- und iso-

Le A 19 882

Propyl, n-, Iso-, sek.- und tert.-Butyl-, 2-Ethylhexyl- und Cyclohexyl-Ester dieser Säuren.

Bevorzugte Pfropfmonomere (b) sind beispielsweise
Acrylsäure, Methacrylsäure, die Methyl-, Ethyl-, n-
und iso-Propyl, n-, iso-, sek.- und tert.-Butyl-,
2-Ethylhexyl- und Cyclohexyl-Ester dieser Säuren,
(Meth)acrylamid, Vinylacetat, Styrol, Maleinsäureanhydrid und Acrylnitril.

Besonders bevorzugte Pfropfmonomere sind n-Butylacrylat, iso-Butylacrylat, tert.-Butylacrylat,
Acrylnitril und Styrol.

Die erfindungsgemäß einzusetzenden Pfropfpolymerisate
werden hergestellt, indem die Polyolefin-Pfropfgrundlage im geschmolzenen Zustand unter intensiver Durchmischung, vorzugsweise in einem Extruder, in erster
Stufe mit Sauerstoff umgesetzt wird, wobei Peroxidgruppen gebildet werden und in einer zweiten Stufe,
vorzugsweise bei demselben Extruderdurchgang, die
radikalisch polymerisierbaren Vinylverbindungen auf
die Polyolefin-Pfropfgrundlage pfropfpolymerisert
werden, wozu die in der ersten Stufe entstandenen
Peroxidgruppen die Initiatorradikale liefern.

In der ersten Stufe des Pfropfverfahrens werden im
allgemeinen ca. 1.000 bis 10.000 ppm aktiven Sauerstoffes (Peroxidgruppen) eingefügt. Während der Peroxidbildung verringert sich das Molekulargewicht

Le A 19 882

- 7 -

der Pfropfgrundlage nicht nennenswert. Die aktivierten Stellen sind gleichmäßig über die Makromoleküle der Pfropfgrundlage verteilt, so daß im Gegensatz zu den Pfropfpolymerisationsverfahren des Standes der Technik sehr viele aktive Stellen zur Verfügung stehen. Daraus resultieren in der sich anschließenden Pfropfpolymerisation viele verhältnismäßig kurze Seitenketten.

Weitere Einzelheiten zur Herstellung der Polyolefinpfropfpolymerisate sind in der DE-OS 27 34 105 beschrieben.

Die erfindungsgemäß einzusetzenden Pfropfpolymerisate unterscheiden sich von den bislang bekannten Pfropfpolymerisaten, die pro ca. 20 000 bis 30 000 C-Atome jeweils eine Pfropfstelle enthalten, und bei denen das als Gewichtsmittel bestimmte mittlere Molekulargewicht $M_w$ der Pfropfäste im allgemeinen zwischen 100 000 und 1 000 000 beträgt, dadurch, daß sie pro ca. 400 bis 2000 C-Atome eine Pfropfstelle aufweisen und das mittlere Molekulargewicht $M_w$ der Pfropfäste 2000 bis 40 000 beträgt.

Die Analytik der Polyolefinpfropfpolymerisate 2) sei nachfolgend am Beispiel eines mit Butylacrylat und Acrylsäure gepfropften Polyethylens erläutert:

Das Polyethylenpfropfpolymerisat wird bei höherer Temperatur in einer Mischung der sich bei Raumtemperatur entmischenden Lösungsmittel Dimethylformamid

Le A 19 882

- 8 -

und Methylcyclohexan gelöst und aus homogener Lösung bei 25°C franktioniert; vgl. R. Kuhn, Makromolekulare Chemie 177, 1525 (1976). Hierbei werden nicht aufgepfropftes Butylacrylat/Acrylsäure-Copolymerisat in der unteren, Dimethylformamid-reichen Phase und ungepfropftes Polyethylen und mit Butylacrylat und Acrylsäure gepfropftes Polyethylen in der oberen Phase gefunden.

Aus der Menge des nicht aufgepfropften Butylacrylat/ Acrylsäure-Copolymerisats C und aller aufgepfropften und nicht aufgepfropften Butylacrylat/Acrylsäure-Copolymerisatanteile $C_G$ läßt sich die Pfropfausbeute

$$\frac{C_G - C}{C_G}$$

bestimmen. Die Pfropfausbeuten liegen im allgemeinen zwischen 50 und 90 %.

Vom nicht aufgepfropften Butylacrylat/Acrylsäure-Copolymerisat werden Gelchromatogramme (Lösungsmittel: Tetrahydrofuran) erstellt, die Grenzviskositäten in Tetrahydrofuran ermittelt und hieraus über eine universelle Eichbeziehung die Molekulargewichte $M_w$ bestimmt; vgl. Thieme Verlag, Stuttgart 1977. Die Molekulargewichte des Copolymerisats C entsprechen den Molekulargewichten der Pfropfäste.

Le A 19 882

Die erfindungsgemäßen Formmassen können die üblichen Füll- und Verstärkungsstoffe, Verarbeitungshilfsmittel, Nucleierungsmittel, Farbstoffe und Stabilisatoren enthalten. Außerdem können sie flammfest ausgerüstet sein. Geeignet sind die üblicherweise für die entsprechende Ausrüstung von amorphen Thermoplasten, insbesondere von Polycarbonaten bekannten Flammschutzmittel.

Als Füll- und Verstärkungsstoffe eignen sich beispielsweise Glasfasern, Glimmer, Talkum, Calziummetasilicat und Quarz in Mengen bis zu 50 Gew.-%, bezogen auf die Summe der Komponenten 1) und 2). Bevorzugte Stabilisatoren und Additive sind z.B. Phosphite, Ester aliphatischer Carbonsäuren mit aliphatischen Polyolen.

Als Flammschutzmittel sind die üblichen für Polycarbonat verwendbaren Verbindungen geeignet, z.B. aromatische Halogenverbindungen wie Dekabromdiphenylether, Tetrabromphthalsäureanhydrid bzw. Salze und Amide der Tetrabromphthalsäure sowie Polycarbonate, die einkondensierte Tetrabrombisphenol A-Reste enthalten. - Darüber hinaus können synergistisch wirksame Verbindungen enthalten sein, wie z.B. Antimontrioxid. Weiterhin können die Formmassen sogenannte Antidripping-Mittel, d.h. Substanzen enthalten, die im Brandfalle einem Abtropfen der Formteile entgegenwirken. Solche Substanzen sind z.B. Polytetrafluorethylen, Siloxane.

Le A 19 882

Die Menge an Flammschutz- und Antidrippingmittel ist dem Verwendungszweck anzupassen. Im allgemeinen reicht eine Menge von 30 Gew.-%, bezogen auf die Summe der Komponenten 1 und 2, vollkommen aus.

Die Herstellung der erfindungsgemäßen Mischungen kann in den üblichen Mischaggregaten wie Knetern, Ein- und Mehrwellenextrudern erfolgen. Besonders geeignet sind Doppelwellenextruder.

Eine besondere Ausführungsform besteht darin, daß die Pfropfung des Polyolefins gemäß DOS 27 34 105 in Gegenwart von Polycarbonat durchgeführt wird.

Die erfindungsgemäßen Formmassen besitzen ein gutes Verarbeitungsverhalten. Sie können auf handelsüblichen Spritzgießmaschinen zu Formteilen mit einwandfreien Oberflächen und einer ausgezeichneten Festigkeit in der Zusammenfließnaht verarbeitet werden. - Deshalb eignen sich die Formmassen besonders zur Herstellung komplizierter, großflächiger Sichtteile mit mehreren Angüssen, z.B. für Gehäuse von Haushaltsgeräten aller Art.

In den folgenden Beispielen wurden die relativen Lösungsviskositäten in Methylenchlorid bei 20°C und einer Konzentration von 5 g/l gemessen.

Beispiele

A.  Herstellung der Ausgangsmaterialien

I.  Herstellung der Polycarbonate (Komponente 1)

I.1  Herstellung von Polycarbonaten aus 4,4'-Dihydroxydiphenyl-2,2-propan

454 g 4,4'-Dihydroxydiphenyl-2,2-propan und 9,5 g p-tert.-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 min. lang Stickstoff durch die Reaktionsmischung geleitet wird. Dann werden 355 g 45 %iger Natronlauge und 1000 g Methylenchlorid zugegeben. Die Mischung wird auf 25°C abgekühlt. Unter Aufrechterhaltung dieser Temperatur durch Kühlen werden 237 g Phosgen während einer Zeitdauer von 120 min. zugegeben.

Eine zusätzliche Menge von 75 g einer 45 %igen Natronlauge wird nach 15 - 30 min. zugegeben bzw. nachdem die Phosgenaufnahme begonnen hat. Zu der entstandenen Lösung werden 1,6 g Triethylamin zugegeben und die Mischung weitere 15 min. gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat hat eine relative

Viskosität von 1,29, gemessen in einer 0,5 %igen Lösung von Methylenchlorid bei 20°C. Das entspricht ungefähr einem Molekulargewicht von 32.000. Das so gewonnene Polycarbonat wird extrudiert und granuliert.

I.2 Herstellung von Polycarbonat aus 4,4'-Dihydroxy-diphenyl-2,2-propan und 4,4'-Dihydroxy-3,3,3',3'-tetramethyl-diphenyl-2,2-propan.

Analog Beispiel I.1 wurde ein Gemisch aus 90 Mol-% 4,4'-Dihydroxydiphenyl-2,2-propan und 10 Mol-% 4,4'-Dihydroxy-3,3,3',3'-tetramethyl-diphenyl-2,2-propan eingesetzt.

Das erhaltene Polycarbonat besaß eine relative Viskosität von 1,32.

II. Herstellung der Pfropfpolymerisate (Komponente 2)

Die Herstellbedingungen und die Eigenschaften sind in den Tabellen 1a und 1b zusammengestellt. Weitere Erläuterungen werden wie folgt gegeben:

Pfropfpolymeristae II.1 und II.2 (Pfropfung auf Hochdruckpolyethylen)

Die in Tabelle 1a und 1b aufgeführten Pfropfproduke II.1 und II.2 auf Basis eines Hochdruckpolyethylens mit einem Schmelzindex (190/2) 7,1 g/ 10 min. (DIN 53 735) wurden in einem gleichsinnig rotierenden Doppelwellen-Extruder mit selbstreinigendem Schneckenbesatz von 57 mm Wellendurchmesser und 41 D Länge hergestellt. Die Kom-

Le A 19 882

pression der Schmelze wurde durch Linksgewinde, Steigungssprünge und links versetzte Knetblöcke im zweigängigen variablen Wellenbesatz erreicht. Es wurden 400 l Luft pro Stunde mit 100 - 130 bar in die Induktionszone und 1200 l Luft pro Stunde mit 70 - 90 bar in die Oxidationszone gedrückt. In die Polymerisationszone wurden die Pfropfmonomeren mit 15 - 18 bar eindosiert.

Tabelle 1a: Herstellung der Polyolefin-Pfropfpolymerisate

| Pfropfprodukt | | II.1 | II.2 | II.3 | II.4 | II.5 |
|---|---|---|---|---|---|---|
| Durchsatz | kg/h | 75 | 80 | 0,9 | 1,05 | 2,5 |
| Wellendrehzahl | U/min | 100 | 107 | 110 | 100 | 25 |
| mittlere Verweilzeit | min | 2,3 | 2,1 | 6 | 6 | – |
| Peroxidgehalt nach Oxidation | ppm | 1000 | 1200 | 1200 | 1200 | 1150 |
| Mooney-Wert x) nach Oxidation | | – | – | 45 | 44 | – |
| MFI +) 190°C nach Oxidation | g/10 min | 7,3 | 7,8 | – | – | – |
| Monomerdosierung | kg/h | 11,3 | 4,5 | 0,12 | 0,195 | 0,25 |
| Monomerzusammensetzung | | 20 % AS 80 % n-BA | 100 % t-BA | 72 % S 28 % AN | 100 % n-BA | 28 % AN 72 % S |
| Umsatz | % | 80 | 89 | 99 | 87 | 64 |
| Produktzusammensetzung | | 1,1 % AS 11 % n-BA | 5 % t-BA | 11 % S 4 % AN | 16 % n-BA | 1,8 % AN 4,6 % S |
| Restperoxidgehalt | ppm | 300 | 250 | 600 | 540 | 380 |
| Mooney-Wert x) Pfropfprodukt | | – | – | 47 | 20 | 13 |
| MFI +) bei 190°C Pfropfprod. | g/10 min | 2,4 | 5,0 | – | – | – |

Erklärung der Abkürzungen:  AN    Acrylnitril
AS    Acrylsäure
n-BA  n-Butylacrylat
t-BA  tert.Butylacrylat
S     Styrol

Die Prozentangaben sind Gew.-%.

+) Melt Flow Index nach DIN 53 735, gemessen bei 190°C und 216 Kp Belastung; Meßdüse: 2,055 mm ⌀, Länge: 8 mm

x) L 4 (100°C)

0024644

80 104.819.0
Le A 19 882 - EP
Le A 19 882 - EP
- 15 -
0024644

Tabelle 1b: Schneckenbedingungen bei der Herstellung der Polyolefin-Pfropfpolymerisate

| Pfropfprodukte | | II.1 | II.2 | | II.3 | II.4 | | II.5 |
|---|---|---|---|---|---|---|---|---|
| Einzugszone | 2 D | 86° | 85° | 2 D | 110° | 110° | 2 D | 60° |
| Aufschmelzzone | 4 D | 140° | 140° | 5 D | 190° | 190° | 4 D | 120° |
| Kompressionszone | 1 D | 200° | 205° | 2 D | 200° | 200° | 1 D | 120° |
| Induktionszone | 3 D | 220° | 225° | 3 D | 235° | 235° | 2 D | 210° |
| Oxidationszone | 6 D | 210° | 210° | 6 D | 210° | 210° | 5 D | 180° |
| Kompressionszone | 1 D | 200° | 200° | 2 D | 210° | 210° | 1 D | 120° |
| Entgasungszone | 2 D | 190° | 190° | 4 D | 190° | 190° | 2 D | 100° |
| Kompressionszone | 1 D | 200° | 200° | 2 D | 200° | 190° | 1 D | 120° |
| Polymerisationszone | 11 D | 210° | 210° | 8 D | 210° | 190° | 10 D | 160° |
| Kompressionszone | 1 D | 210° | 210° | 2 D | 210° | 190° | 1 D | 160° |
| Verdampferzone | 6 D | 220° | 220° | 7 D | 200° | 190° | 6 D | 190° |
| Extrusionszone | 3 D | 200° | 200° | 5 D | 200° | 190° | 3 D | 200° |
| | 41 D | | | 48 D | | | 38 D | |

Die Temperaturen sind in Celsius-Graden angegeben.

Pfropfpolymerisate II.3 + II.4 (Pfropfung auf Ethylen-Propylen-Copolymer)

Die Pfropfung von Styrol und Acrylnitril bzw. n-Butylacrylat auf Buna $^R$ AP 407 (Ethylen-Propylen-Kautschuk der Buna-Werke Hüls) wurde in einem gegensinnig rotierenden Doppelwellen-Extruder vom Typ Point Eight der Firma Welding Inc. mit 20 mm Wellendurchmesser und 48 D Länge bei den in Tabelle 1a und 1b angegebenen Bedingungen ausgeführt (Pfropfprodukte II.3 und II.4). Die Kompression der Schmelze wurde durch Vergrößerung des Kerndurchmessers der Wellen in den Kompressionszonen erreicht. Die Wellen waren mit einer durchgehenden Steigung von 1 D ausgerüstet.

Es wurden 80 l Luft pro Stunde mit 40 - 60 bar in die Induktionszone und 240 l Luft pro Stunde mit 20 - 40 bar in die Oxidationszone gedrückt. In die Polymerisationszone wurden die Pfropfmonomeren mit 5 bar eindosiert. Anschließend wurden die nicht umgesetzten Monomeren verdampft, das Produkt als Strang ausgedrückt und granuliert.

Pfropfpolymerisat II.5 (Pfropfung auf Ethylen-Vinylacetat-Copolymeres)

Die Pfropfung von Styrol und Acrylnitril auf ein Ethylen-Vinylacetat-Copolymeres (45 Gew.-% Vinylacetat, Schmelzindex (190/2,16) 4,2 g/10 min nach DIN 53 735) wurde in einem gleichsinnig rotierenden Doppelwellenextruder mit selbstreinigendem variablem

Le A 19 882

Schneckenbesatz von 32 mm Durchmesser und 38 D Länge durchgeführt. Die Kompession der Schmelze wurde durch Linksgewinde, Steigungssprünge und linksversetzte Knetblöcke im zweigängigen variablen Wellenbesatz erreicht. Der Durchsatz betrug 2500 g pro Stunde bei 25 UpM der Wellen. Es wurden 100 l Luft pro Stunde unter 30 bar in die Induktionszone und 300 l Luft pro Stunde unter 20 bar in die Oxidationszone gedrückt. In die Polymerisationszone wurden 250 g pro Stunde einer Mischung aus 28 Tln. Acrylnitril und 72 Tln. Styrol unter 2 bar Druck eindosiert. Der Umsatz betrug 64 %. Das Pfropfprodukt enthielt 1,8 % Acrylnitril und 4,6 % Styrol. Nach der Oxidationszone enthielt die Schmelze 2500 ppm aktiven Sauerstoff. Der Mooney-Wert betrug 13.

Die Längen und Temperaturen der Zonen des Extruders sind in Tabelle 1b angegeben.

III. Herstellung eines Pfropfpolymerisats aus Styrol und Acrylnitril auf ein Ethylen-Vinylacetat-Copolymerisat (zum Vergleich).

Gemäß DOS 22 15 588 und 23 05 681 wurde in einen 5 l-Autoklaven unter $N_2$ ein Gemisch aus 900 g Ethylen-Vinylacetat-Copolymerem mit 45 Gew.-% Vinylacetat-Gehalt (wie Beispiel II.5) 28 g Acrylnitril, 72 g Styrol, 35 g Allylacetat und 1,5 kg tert.-Butanol gefüllt. Weiterhin wurden 40 g Propylen dazugedrückt. Bei 85°C wurde sodann unter Rühren eine Lösung aus 3 g Dibenzoylperoxid in einem Gemisch aus 30 g Allyl-

Le A 19 882

acetat und 100 g tert.-Butanol innerhalb 7 h portionsweise zugepumpt.

Nach einer weiteren Rührzeit von 10 Stunden bei 85°C wurde das tert.-Butanol und die Restmonomeren mit $H_2O$-Dampf abdestilliert und das verbleibende Pfropfpolymerisat getrocknet. Es bestand zu 91,3 Gew.-% aus Ethylen-Vinylacetat-Copolymerisat und zu 8,7 Gew.-% aus Styrol-Acrylnitril-Copolymerisat.

Das Pfropfpolymerisat besaß einen Schmelzindex von 2,3 g/10 min (190°C/2,16 kg).

B. Herstellung der Mischungen aus den Pfropfpolymerisaten und den Polycarbonaten (Beispiele IV bis XIII)

Die Einarbeitung der Polyolefin-Pfropfpolymerisate und Vergleichsprodukte in Polycarbonat erfolgte in einem Doppelwellenextruder ZSK 32 bei Temperaturen von 260-280°C.

Herstellung, Zusammensetzung und Eigenschaften der Mischungen sind in Tabelle 2 zusammengestellt.

Zur Bestimmung der Zusammenfließnahtfestigkeit wurden Normkleinstäbe 4 x 6 x 50 mm) von beiden Enden her angespritzt. Die Spritzlinge besaßen eine Zusammenfließnaht ungefähr in der Mitte. Die

BAD ORIGINAL

Le A 19 882

Le A 19 882

- 19 -

Schlagzähigkeit solcher Prüfstäbe gemäß
DIN 53 435 wird als Zusammenfließnahtfestigkeit bezeichnet.

Tabelle 2: Herstellung, Zusammensetzung und Eigenschaften der Mischungen aus Polycarbonaten und Olefinpfropfpolymerisaten

| Beispiel Nr. | Pfropfpolymerisat Typ | Gew.-% | Polycarbonat Typ | Gew.-% | Masse-temp. °C | Schmelzindex g/10 min (1) | Kerbschlag-zähigkeit KJ/m² (2) | Zusammenfließ-nahtfestig-keit KJ/m² |
|---|---|---|---|---|---|---|---|---|
| IV | Hochdruck-Polyethylen (x) | 10 | I.1 | 90 | 275 | 23,8 | 23,5 | 3,6 |
| V | Lupolen$^R$ A 2710 HX | 10 | I.1 | 90 | 275 | 21,2 | 24,6 | 4,3 |
| VI | III | 10 | I.1 | 90 | 273 | 22,9 | 25,3 | 5,1 |
| VII | II.1 | 10 | I.1 | 90 | 271 | 23,1 | 31,7 | 8,5 |
| VIII | II.1 | 5 | I.1 | 95 | 275 | 17,5 | 27,3 | 10,4 |
| IX | II.2 | 10 | I.2 | 90 | 278 | 22,3 | 29,8 | 7,8 |
| X | II.3 | 10 | I.1 | 90 | 275 | 19,7 | 32,1 | 9,2 |
| XI | II.3 | 20 | I.1 | 80 | 263 | 35,2 | 36,2 | 8,7 |
| XII | II.4 | 10 | I.1 | 90 | 278 | 21,5 | 28,7 | 8,5 |
| XIII | II.5 | 10 | I.2 | 90 | 275 | 22,8 | 29,5 | 9,7 |

(1) nach DIN 53 735, 300°C, 1,2 kp Belastung

(2) nach DIN 53 453

Lupolen A 2710 HX ist ein Copolymeres aus Ethylen und n-Butylacrylat der BASF

x) Schmelzindex 190/2) 7,1 g/10 min

0024644

- 21 -

Patentansprüche

1. Mischungen aus

   1. 70 bis 99 Gew.-% überwiegend aromatischem Polycarbonat und

   2. 30 bis 1 Gew.-% Polyolefinpfropfpolymerisat aus

      a) 70 - 95 Gew.-% einer Pfropfgrundlage bestehend aus einem Homopolymerisat von aliphatischen und/oder aromatischen Monolefinen oder einem Copolymerisat aus diesen Olefinen, bis zu 50 Gew.-% anderer mono-olefinisch ungesättigter, radikalisch polymerisierbarer Verbindungen und/oder bis zu 5 Gew.-% Diolefinen, und

      b) 5 - 30 Gew.-% radikalisch pfropfbarer Vinylverbindungen, wobei sich die unter 1) und 2) genannten Prozentangaben auf die Summe der Komponenten 1) und 2), die in der ersten Zeile von a) und b) genannten Prozentangaben auf die Summe der Komponenten a) und b) und die restlichen unter a) gemachten Prozentangaben auf die Summe der für die Herstellung der Pfropfgrundlage verwandten Ausgangsmonomeren beziehen, wobei die Olefinpfropfpolymerisate erhalten worden sind, indem man die Schmelze

Le A 19 882

der Pfropfgrundlage a) unter einem Druck von 1-150 bar bei einer Temperatur von 80-300°C mit Sauerstoff oder Sauerstoff-haltigen Gasen unter intensiver Durchmischung maximal 10 Minuten in Kontakt bringt, unmittelbar danach bei Abwesenheit von Sauerstoff bzw. Sauerstoff-haltigem Gas unter intensiver Durchmischung die aufzupfropfenden Vinylverbindungen b) zufügt und nach der Pfropfpolymerisation die Restmonomeren entfernt.

2. Mischungen nach Anspruch 1, dadurch gekennzeichnet, daß das Polycarbonat aus Bis-(4-hydroxyphenyl)-propan-2,2 und/oder Bis-(4-hydroxy-3,5-dibrom-phenyl)-propan-2,2 und/oder Bis-(4-hydroxy-3,5-dimethyl-phenyl)-propan hergestellt ist.

3. Mischungen nach Anspruch 1, dadurch gekennzeichnet, daß die Pfropfgrundlage Polyethylen, Polypropylen und Polybutylen ist.

4. Mischungen nach Anspruch 1, dadurch gekennzeichnet, daß die Pfropfgrundlage ein Copolymerisat aus mindestens 2 Monomeren der Gruppe Ethylen, Propylen, Buten und Vinylacetat ist.

5. Mischungen nach Ansprüchen 1, 3, 4, dadurch gekennzeichnet, daß die Pfropfgrundlage bis zu 5 Gew.-% Reste von Butadien und/oder Isopren enthält.

Le A 19 882

6. Mischungen nach Anspruch 1, dadurch gekennzeichnet, daß die Pfropfmonomeren aus der Gruppe Acrylsäure, Methacrylsäure, den Methyl-, Ethyl-, Propyl-, Butyl-, 2-Ethylhexyl- und Cyclohexylestern dieser Säuren, Acrylamid, Methacrylamid, Vinylacetat, Styrol, Maleinsäureanhydrid und Acrylnitril ausgewählt sind.

Le A 19 882